# EUROPÄISCHE PATENTANMELDUNG

(11) **EP 4 137 017 A1**
(43) Veröffentlichungstag der Anmeldung: **22.02.2023**
(21) Anmeldenummer: 22180378.6
(22) Anmeldetag: 22.06.2022
(51) Int. Cl.: A47J 37/04, A47J 37/07

(54) **GRILLVORRICHTUNG ZUM GAREN EINES GRILLGUTES**

(30) Priorität: 19.08.2021 DE 102021121564
(71) Anmelder: Heid, Claudia, 97080 Würzburg (DE)
(72) Erfinder: Özalp, Saadettin, 97080 Würzburg (DE)
(74) Vertreter: advotec.

(57) **Zusammenfassung**

Die Erfindung betrifft eine Grillvorrichtung (01) zum Garen eines Grillgutes, umfassend zumindest eine Aufnahmevorrichtung zur Aufnahme eines Grillgutvorrats und umfassend zumindest eine Heizvorrichtung (08) zum Beheizen der Oberfläche des in der Aufnahmevorrichtung aufgenommenen Grillgutes, wobei die Aufnahmevorrichtung in der Art einer Grillgutkassette (06) ausgebildet ist, die den Grillgutvorrat umschließt, wobei die Grillgutkassette (06) eine der Heizvorrichtung (08) gegenüberliegend anordenbare Grillöffnung (07) aufweist, und wobei das Grillgut mittels einer Fördereinrichtung (13, 14) durch die Grillöffnung (07) aus der Grillgutkassette (06) in Richtung der Heizvorrichtung (08) ausgefördert werden kann.

## Beschreibung

Die Erfindung betrifft eine Grillvorrichtung zum Garen eines Grillgutes nach dem Oberbegriff des Anspruchs 1. Gattungsgemäße Grillvorrichtungen umfassen zumindest eine Aufnahmevorrichtung zur Aufnahme eines Grillvorrats, beispielsweise Fleisch. Diese Aufnahmevorrichtung kann insbesondere in der Art eines Drehspießes ausgebildet sein, um sogenanntes Döner-Kebab herzustellen. Weiter umfassen die gattungsgemäßen Grillvorrichtungen eine Heizvorrichtung zum Beheizen der Oberfläche des in der Aufnahmevorrichtung aufgenommenen Grillgutes, um das Grillgut bis zu einem gewünschten Grad garen bzw. grillen zu können.

Eine gattungsbildende Grillvorrichtung zur Herstellung von Döner-Kebab ist beispielsweise in der DE 20 2007 008 965 U1 beschrieben.

Der Verzehr von gegrilltem Grillgut, insbesondere Döner-Kebab, stellt heute eine der häufigsten Fast-Food-Varianten im deutschsprachigen Raum und darüber hinaus dar. Allerdings weisen die im Schnell-Imbissmarkt hergestellten Döner-Kebab-Portionen vielfach erhebliche Qualitätsmängel auf, die strukturell auf den zur Herstellung des Döner-Kebabs verwendeten Grillvorrichtungen beruhen. Ein erstes Problem besteht darin, dass zur Herstellung des Döner-Kebabs große Drehspieße mit großen Mengen von Fleisch verwendet werden, die nach Einhängen in den entsprechenden Grillvorrichtungen der Umgebungsluft offen und ungeschützt ausgesetzt sind. Aufgrund der warmen Umgebungstemperatur nach dem Einsetzen des Drehspießes in die Grillvorrichtung kann es sehr leicht zu bakteriellen Kontaminationen des Fleisches kommen. Krankheitserregende Bakterien vermehren sich im Temperaturbereich oberhalb von 7° C zunehmend und finden an den offenen Drehspießen, in den bekannten Grillvorrichtungen, gute Lebensbedingungen. Eine Vielzahl von Untersuchungen hat gezeigt, dass die Keimbelastung an mit den bekannten Grillvorrichtungen hergestellten Döner-Kebab-Portionen vielfach das zulässige Maß bei Weitem überschreitet.

Weiterhin nachteilig an den bekannten Grillvorrichtungen ist es, dass diese keine standardisierten Abläufe bei der Herstellung der Döner-Kebab-Portionen ermöglichen. Vielmehr hängt es vom jeweiligen Bediener der Grillvorrichtung ab, inwieweit der erforderliche Gargrad des Fleisches, der für eine sichere Abtötung vorhandener Keime erforderlich ist, erreicht wird. Die Regulierung der Garzeit sowie der Gartemperaturen erfolgt also nach Ermessen der zubereitenden Person und kann somit je nach Tageszeit stark schwanken. Abhängig von den Geschäftszeiten und der Kundenfrequenz kann das gegrillte Fleisch dann in Stoßzeiten vielfach nur kurz gegrillt und viel zu früh vom Drehspieß heruntergeschnitten worden sein. Durch die unzureichende Hitzeeinwirkung beim Garvorgang ist eine ausreichende Abtötung von Mikroorganismen nicht gewährleistet.

Weiterhin nachteilig an den bekannten Grillvorrichtungen ist es, dass diese eine Vielzahl von manuellen Arbeitsvorgängen erfordern, wozu eine gewisse Erfahrung bei der Handhabung der Grillvorrichtung erforderlich ist. Die Herstellung und der Verkauf von Döner-Kebab erfolgen deshalb bisher vielfach nur in entsprechend spezialisierten Ladengeschäften und können nicht auf andere Teile von Fast-Food-Anbietern übertragen werden.

Ausgehend von diesem Stand der Technik ist es deshalb Aufgabe der vorliegenden Erfindung, eine neue Grillvorrichtung vorzuschlagen, die die Nachteile des vorbekannten Stands der Technik vermeidet.

Bevorzugte Ausführungsformen der Erfindung sind Gegenstand der Unteransprüche.

Kern der erfindungsgemäßen Grillvorrichtung ist eine Grillgutkassette, die zur Aufnahme des vorbereiteten Grillgutvorrats, der aus Fleisch oder auch anderen Speisen bestehen kann, dient. Durch die Verwendung der Grillgutkassette wird das Grillgut an mehreren Seiten, insbesondere allseitig, umschlossen und dadurch vor der Kontamination mit Krankheitskeimen geschützt. Die Grillgutkassette weist eine Grillöffnung auf, die der Heizvorrichtung gegenüberliegend anordenbar ist. Nur im Bereich der Grillöffnung erfolgt also eine direkte Erhitzung des Grillgutes mittels der Heizvorrichtung, so dass die Erhitzung des Grillgutes sehr zielgerichtet erfolgen kann. Das Grillgut in der Grillöffnung kann also sehr schnell auf hohe Temperaturen erhitzt werden, ohne dass dadurch der restliche Grillgutvorrat maßgeblich erwärmt wird. Auf diese Weise wird eine schnelle Erhitzung des Grillgutes in der Grillöffnung auf einen Temperaturbereich ermöglicht, in dem die noch wenigen vorhandenen Keime zuverlässig abgetötet werden. Sobald das Grillgut in der Grillöffnung den gewünschten Gargrad erreicht hat, kann dann das in der Grillöffnung überstehende Grillgut abgeschnitten werden. Um ein Ausfördern des Grillgutes aus der Grillgutkassette durch die Grillöffnung zu ermöglichen, umfasst die Grillvorrichtung eine Fördereinrichtung. In dieser Fördereinrichtung kann das Grillgut dann vor oder nach dem Abschneiden der letzten Grillgutportion aus der Grillgutkassette ausgefördert und anschließend mit der Heizvorrichtung gegrillt werden. Durch die Verwendung der Grillgutkassette kann die Herstellung der Grillgutportionen außerordentlich hygienisch erfolgen. Außerdem sind standardisierte Arbeitsabläufe einführbar, die die Herstellung der Grillgutportionen auch mit ungeübtem Bedienpersonal ermöglichen.

In welcher Bauart die Fördereinrichtung zum Ausfördern des Grillgutes aus der Grillgutkassette ausgebildet ist, ist grundsätzlich beliebig. Gemäß einer bevorzugten Ausführungsform ist es vorgesehen, dass die Fördereinrichtung ein Schubelement umfasst, das an einer Seite des Grillgutvorrats zur Anlage kommen kann. Das Schubelement kann mit einer Verstelleinrichtung in Richtung der Grillöffnung verstellt werden, so dass durch die Verstellung des Schubelements das Grillgut durch die Grillöffnung aus der Grillgutkassette ausgefördert wird.

Je kleiner der noch vorhandene Grillgutvorrat in der Grillgutkassette ist, desto höher die Gefahr, dass das verbliebene Grillgut ungewollt aus der Grillgutkassette herausfällt. Um dies zu verhindern, kann am Schubelement zumindest ein Fixierelement, insbesondere ein oder mehrere Fixierspieße, vorgesehen sein. Mit diesem Fixierelement kann dann eine Seite des Grillgutvorrats am Schubelement fixiert werden, so dass das Grillgut nicht ungewollt aus der Grillgutkassette herausfällt.

Die geometrische Gestaltung der Grillgutkassetten ist grundsätzlich beliebig. Im Hinblick auf eine standardisierte Zubereitung der Grillgutportionen ist es vorteilhaft, wenn die Grillgutkassetten eine rechteckige Form aufweisen. Die Grillgutkassette sollte das Grillgut entweder an vier oder fünf Seitenflächen umschließen. Eine sechste Seitenfläche birgt in jedem Fall eine rechteckige Grillöffnung, durch die das Grillgut aus der Grillgutkassette ausgefördert werden kann. Für die Lagerung und den Transport der Grillgutkassetten können die offene Grillöffnung und gegebenenfalls weitere offene Seitenflächen der Grillgutkassetten durch Anbringung entsprechender Deckel verschlossen werden.

Die Größe der Grillgutkassetten sollte ein bestimmtes Maß nicht überschreiten, um einen großen Grillgutvorrat in den einzelnen Grillgutkassetten zu vermeiden. Um trotzdem in der Grillvorrichtung einen Grillgutvorrat aufnehmen zu können, der größer ist als der Grillgutvorrat in den einzelnen Grillgutkassetten, kann die Grillvorrichtung ein Grillgutgehäuse umfassen. In diesem Grillgutgehäuse können dann mehrere, insbesondere drei, Grillgutkassetten übereinander oder nebeneinander aufgenommen werden. Sobald eine Grillgutkassette vollständig entleert ist, kann diese ausgetauscht und eine neue Grillgutkassette in dem Grillgutgehäuse angeordnet werden.

Bei einfachen Bauformen der erfindungsgemäßen Grillvorrichtung kann das Abschneiden des an der Grillöffnung gegrillten Grillgutes manuell erfolgen, was allerding im Hinblick auf eine standardisierte Herstellung von Grillgutportionen nachteilig ist. Insofern ist es besonders vorteilhaft, wenn die Grillvorrichtung eine verstellbar gelagerte und mit einer Antriebsvorrichtung antreibbare Schneidvorrichtung umfasst, mit der das an der Grillöffnung überstehende, gegarte Grillgut portionsweise abgeschnitten werden kann. Durch die rotatorisch antreibbare Schneidvorrichtung kann das Abschneiden der entsprechenden Menge einer Grillgutportion standardisiert werden.

Für die Bauart der Schneidvorrichtung zum Abschneiden des gegarten Grillgutes gibt es verschiedene Möglichkeiten. Mittels einer ersten Bauartvariante ist es vorgesehen, dass die Schneidvorrichtung zumindest ein linear antreibbares Schneidmesser umfasst. Die oszillierende Schneide des Schneidmessers kann durch Antrieb einer Antriebseinrichtung schneidend am Grillgut, das an der Grillöffnung übersteht, zum Eingriff gebracht werden, und durch die oszillierende Schneide wird das Grillgut dann abgeschnitten.

Alternativ zu einem solchen linear angetriebenen Schneidmesser kann auch ein rotatorisch antreibbares Schneidmesser vorgesehen werden. Die rotierende Schneide des Schneidmessers kann dann durch Antrieb einer Antriebseinrichtung schneidend am überstehenden Grillgut zum Eingriff gebracht werden und das Grillgut abschneiden. Gegebenenfalls können auch mehrere rotatorisch antreibbare Schneidmesser vorgesehen werden, um eine entsprechende Schnittbreite zu ermöglichen.

Um das Grillgut nach dem Abschneiden in einfacher Weise weiterverarbeiten zu können, ist es besonders vorteilhaft, wenn in der Grillvorrichtung, insbesondere an der Schneidvorrichtung, ein Auffangelement vorgesehen ist, mit dem das abgeschnittene Grillgut aufgefangen werden kann. Insofern fällt also das abgeschnittene Grillgut unter Schwerkrafteinfluss in das dafür vorgesehene Auffangelement und kann dann aus dem Auffangelement heraus in einfacher Weise weiterverarbeitet werden. Im Hinblick auf eine korrekte Abrechnung der mit der Grillvorrichtung hergestellten Grillgutportionen ist es vorteilhaft, wenn die Schneidvorrichtung mit einem Zählwerk verbunden ist, mit dem die mit der Schneidvorrichtung abgeschnittenen Grillgutportionen gezählt werden können. Um zu ermöglichen, dass auch mit einer relativ kleinflächigen Heizvorrichtung ein großer Grillgutvorrat in der Grillvorrichtung gegart werden kann, ist es besonders vorteilhaft, wenn die Heizvorrichtung verstellbar gelagert ist und mit einer Antriebsvorrichtung parallel zu der Grillöffnung in der Grillgutkassette angetrieben werden kann. Auf diese Weise wird es ermöglicht, dass durch Verfahren der Heizvorrichtung das Grillgut in der Grillöffnung durch Vorbeifahren der Heizvorrichtung gegrillt wird.

Welche Art von Heizvorrichtung zum Grillen des Grillgutes eingesetzt wird, ist grundsätzlich beliebig. Um eine unerwünschte übermäßige Erwärmung des Grillgutes in der Heizvorrichtung zu vermeiden, ist es besonders vorteilhaft, wenn die Heizvorrichtung in der Art eines Heizstrahlers, insbesondere in der Art eines Infrarotstrahlers, ausgebildet ist. Diese Heizstrahler haben die Eigenschaft, dass sie nur wenig Abwärme abgeben und insofern eine Erwärmung der Grillvorrichtung außerhalb der Grillöffnung in der Grillgutkassette weitgehend vermieden wird.

Im Hinblick auf eine möglichst hygienische Zubereitung der Grillgutportionen ist es weiterhin besonders vorteilhaft, wenn die Grillvorrichtung in einem Gehäuse angeordnet ist, das einen geschlossenen Garraum bildet. Das Gehäuse kann dann entsprechende Öffnungen, die beispielsweise mit einer Gehäusetür verschlossen werden können, aufweisen, um die Grillvorrichtung mit Grillgutkassetten zu beschicken und parallel dazu die Grillgutportionen aus dem Gehäuse entnehmen zu können. Um eine unerwünschte Erwärmung des Grillgutes in den Grillgutkassetten außerhalb der Grillöffnung weitgehend zu vermeiden, kann im Gehäuse der Grillvorrichtung eine Kühlvorrichtung angeordnet werden, mit der die Grillgutkassette mittelbar oder unmittelbar gekühlt werden kann. Dies bedeutet also mit anderen Worten, dass die Grillgutkassette in einer gekühlten Umgebung angeordnet ist, so dass sich der Grillgutvorrat in der Grillgutkassette nicht über ein gewünschtes Maß erwärmt. Lediglich an der Grillöffnung der Grillgutkassette kann durch Betrieb der Heizvorrichtung eine Erwärmung des Grillgutes bis zum Erreichen des gewünschten Gargrades realisiert werden.

Im Hinblick auf eine weitgehend standardisierte Herstellung von Grillgutportionen ist es vorteilhaft, wenn die Grillvorrichtung eine Steuerung umfasst, die die Fördereinrichtung an der Grillgutkassette, mit der das Grillgut aus der Grillgutkassette ausgefördert wird, und/oder den Antrieb der Schneidvorrichtung und/oder den Antrieb der Heizvorrichtung vollautomatisiert oder teilautomatisiert steuern kann.

Um den Einsatz der erfindungsgemäßen Grillvorrichtung zu ermöglichen, wird weiterhin eine Grillgutkassette zur Aufnahme eines Grillgutvorrates vorgeschlagen. Die Grillgutkassette weist eine Grillöffnung auf, die einer Heizvorrichtung in der Grillvorrichtung gegenüberliegend anordenbar ist. Die Grillgutkassette umfasst eine Fördereinrichtung, mit der das Grillgut durch die Grillöffnung aus der Grillgutkassette ausgefördert werden kann.

Besonders vorteilhaft ist es, wenn die Grillöffnung der Grillgutkassette mit einem Schutzdeckel verschlossen werden kann.

Eine Ausführungsform der Erfindung ist in den Zeichnungen schematisiert dargestellt und wird nachfolgend beispielhaft erläutert.

Es zeigen:
- **Fig. 1**: eine erfindungsgemäße Grillvorrichtung in perspektivischer seitlicher Ansicht;
- **Fig. 2**: die Grillvorrichtung gemäß Fig. 1 in Ansicht von vorne;
- **Fig. 3**: die Grillvorrichtung gemäß Fig. 1 in seitlicher Ansicht;
- **Fig. 4**: eine Grillgutkassette zur Verwendung in der Grillvorrichtung gemäß Fig. 1 in perspektivischer seitlicher Ansicht;
- **Fig. 5**: die Grillgutkassette gemäß Fig. 4 in Ansicht von oben;
- **Fig. 6**: die Grillgutkassette gemäß Fig. 4 in seitlicher Ansicht;
- **Fig. 7**: das Grillgutgehäuse der Grillvorrichtung gemäß Fig. 1 zur Aufnahme von drei übereinander angeordneten Grillgutkassetten in perspektivischer seitlicher Ansicht;
- **Fig. 8**: die Antriebseinrichtung zum Antrieb der Heizvorrichtung der Grillvorrichtung gemäß Fig. 1 in seitlicher Ansicht;
- **Fig. 9**: die Antriebseinrichtung zum Antrieb der Schneidvorrichtung der Grillvorrichtung gemäß Fig. 1 in Ansicht von vorne.

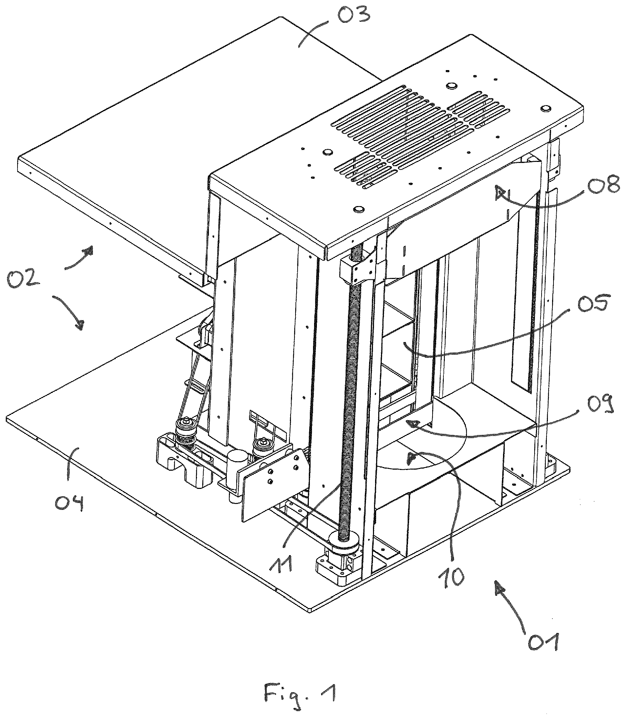

**Fig. 1** zeigt eine Grillvorrichtung 01, die in einem Gehäuse 02 angeordnet ist. Am Gehäuse 02 sind in der Darstellung gemäß Fig. 1 nur der Deckel 03 und die Bodenplatte 04 dargestellt, wohingegen die Seitenwände und die Gehäusetür nicht dargestellt sind.

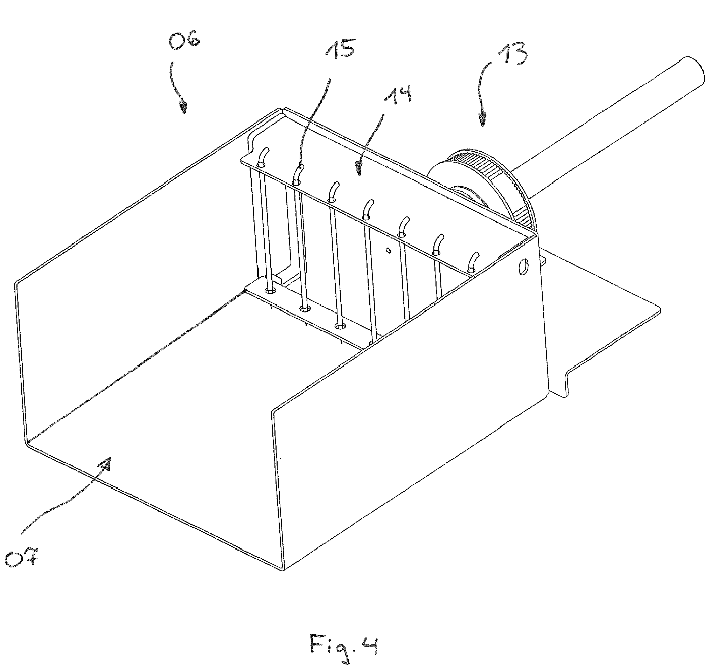

Die Grillvorrichtung 01 umfasst ein Grillgutgehäuse 05, in dem drei Grillgutkassetten 06 (siehe Fig. 4) übereinander angeordnet werden können. In jeder der Grillgutkassetten ist ein Grillgutvorrat enthalten und kann mittels einer Fördereinrichtung, die nachfolgend noch näher erläutert wird, durch eine Grillöffnung 07 (siehe Fig. 4) aus dem Inneren der Grillgutkassette 06 ausgefördert werden.

Die Grillvorrichtung 01 umfasst weiter eine Heizvorrichtung 08, die mittels einer Antriebseinrichtung, nämlich einem aus zwei Antriebsspindeln gebildeten Säulenportal, vertikal angetrieben werden kann. Durch Antrieb der Antriebseinrichtung wird also die Heizvorrichtung 08 parallel zu den Grillöffnungen 07 der in dem Grillgutgehäuse 05 angeordneten Grillgutkassetten 06 verfahren. Dabei wird das Grillgut in den Grillöffnungen 07 der Grillgutkassetten 06 durch die von der Heizvorrichtung 08 abgegebene Infrarotstrahlung gegart bzw. gegrillt. Sobald die Heizvorrichtung 08 bis ganz nach unten verfahren ist, wird die Heizvorrichtung 08 wieder nach oben an ihren Ausgangspunkt verstellt. Anschließend kann mit einer Schneidvorrichtung 09 das gegarte bzw. gegrillte Grillgut, das über die Grillgutkassetten 06 übersteht, abgeschnitten werden. Das abgeschnittene Grillgut fällt dann durch eine Öffnung 10 nach unten in ein dort bereitgestelltes Auffangelement, beispielsweise eine Fleischschale. Der Überstand des gegarten Grillgutes wird so bemessen, dass gerade eine Grillgutportion mit der Schneidvorrichtung 09 abgeschnitten und anschließend weiterverarbeitet werden kann.

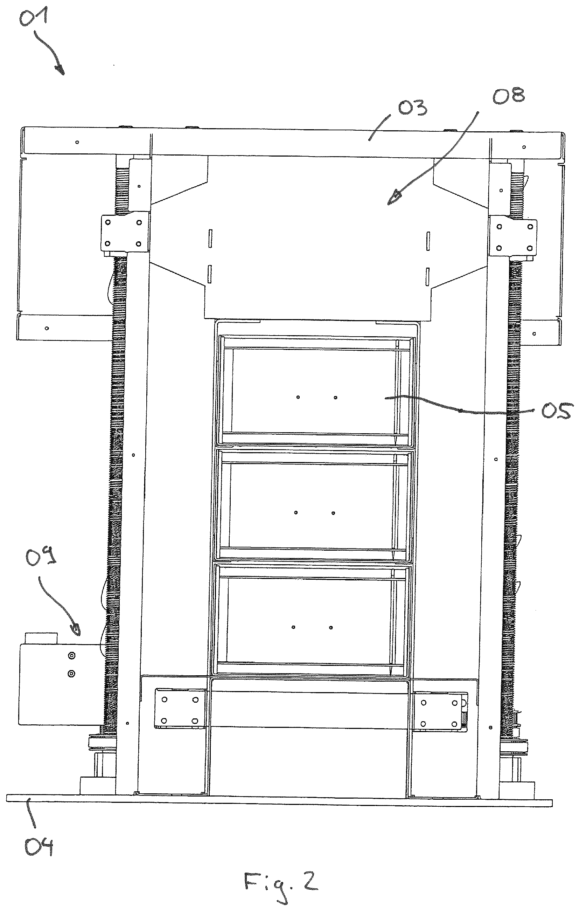

**Fig. 2** zeigt die Grillvorrichtung 01 mit dem Grillgutgehäuse 05 und der Heizvorrichtung 08 in Ansicht von vorne. Der vertikale Antrieb der Heizvorrichtung 08 erfolgt durch rotatorischen Antrieb der beiden Antriebsspindeln 11.

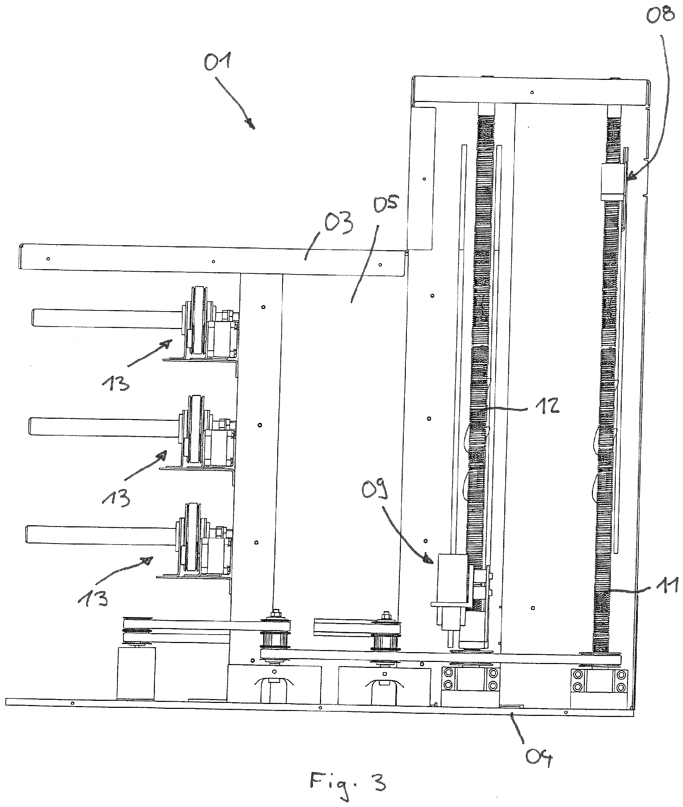

**Fig. 3** zeigt die Grillvorrichtung 01 in seitlicher Ansicht. Man erkennt die linke Antriebsspindel 11 zum vertikalen Antrieb der Heizvorrichtung 08. Weiter erkennt man die linke Antriebsspindel 12, die mit einer rechten Antriebsspindel 12 zusammenwirkt, um durch Rotation der beiden Antriebsspindeln 12 eine vertikale Verstellung der Schneidvorrichtung 09 zu bewirken. Hinter dem Grillgutgehäuse 05 sind drei Antriebseinrichtungen 13 vorgesehen, durch deren Antrieb das Grillgut aus den Grillgutkassetten 06 durch die Grillöffnungen 07 ausgefördert werden kann.

**Fig. 4** zeigt in vergrößerter Ansicht eine Grillgutkassette 06 mit der dahinter angeordneten Antriebsvorrichtung 13. Die Grillgutkassette 06 weist eine rechteckige Form auf und umschließt das Grillgut an vier Seitenflächen. Die obere Seitenfläche ist bei der dargestellten Ausführungsform der Grillgutkassette 06 offen. Es sind aber auch Ausführungsformen denkbar, bei denen die obere Seitenfläche der Grillgutkassette geschlossen ist. Die nach vorne weisende Seitenfläche der Grillgutkassette 06 ist offen und bildet die Grillöffnung 07, durch die das im Inneren der Grillgutkassette 06 aufgenommene Grillgut aus der Grillgutkassette 06 ausgefördert werden kann.

Zum Ausfördern des Grillgutes aus der Grillgutkassette 06 dient eine Fördereinrichtung mit einem Schubelement 14, das an der hinteren Seite des Grillgutvorrats zur Anlage kommt. Zur Fixierung des Grillgutvorrats am Schubelement 14 dienen mehrere Fixierelemente 15, die in der Art von Fixierspießen ausgebildet sind. Die Fixierelemente 15 verhindern, dass das Grillgut zum Ende hin unkontrolliert aus der Grillgutkassette 06 herausfällt. Durch Antrieb der Antriebsvorrichtung 13 kann das Schubelement 14 in Richtung der Grillöffnung 07 herausgeschoben und damit das vor dem Schubelement 14 befindliche Grillgut aus der Grillöffnung 07 kontrolliert ausgefördert werden. Die Antriebsvorrichtung 13 wird dabei in einem Arbeitstakt so weit vorgeschoben, dass mit dem Schubelement 14 gerade die Menge an Grillgut aus der Grillöffnung 07 ausgefördert wird, die zur Herstellung einer Grillgutportion erforderlich ist.

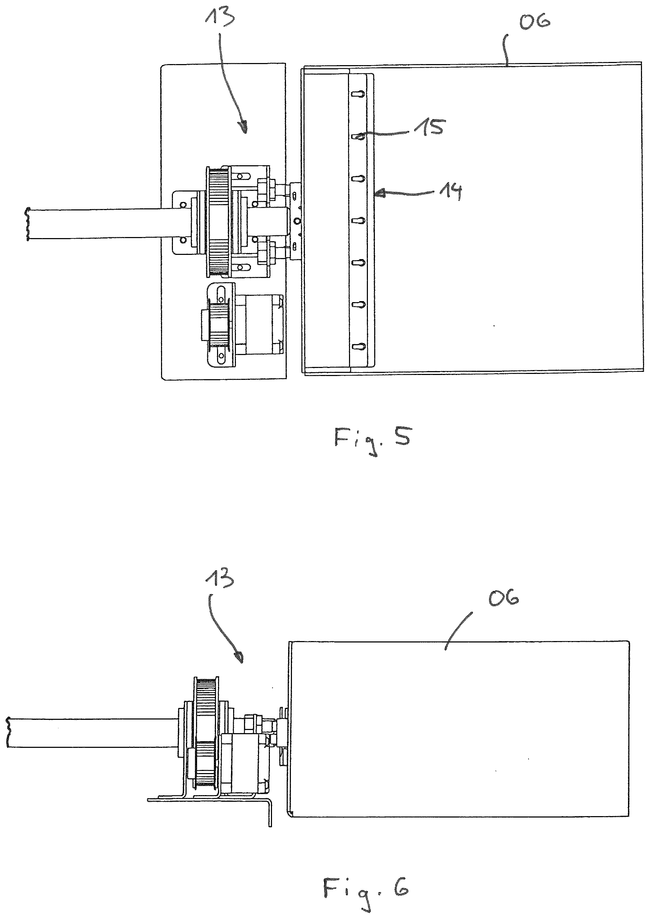

**Fig. 5** zeigt die Grillgutkassette 06 mit der dahinter angeordneten Antriebsvorrichtung 13 in Ansicht von oben. Der Antrieb der Antriebsvorrichtung 13 erfolgt durch rotatorischen Antrieb eines Zahnriemens, der in Fig. 5 nicht dargestellt ist.

**Fig. 6** zeigt die Grillgutkassette 06 mit der Antriebsvorrichtung 13 in seitlicher Ansicht.

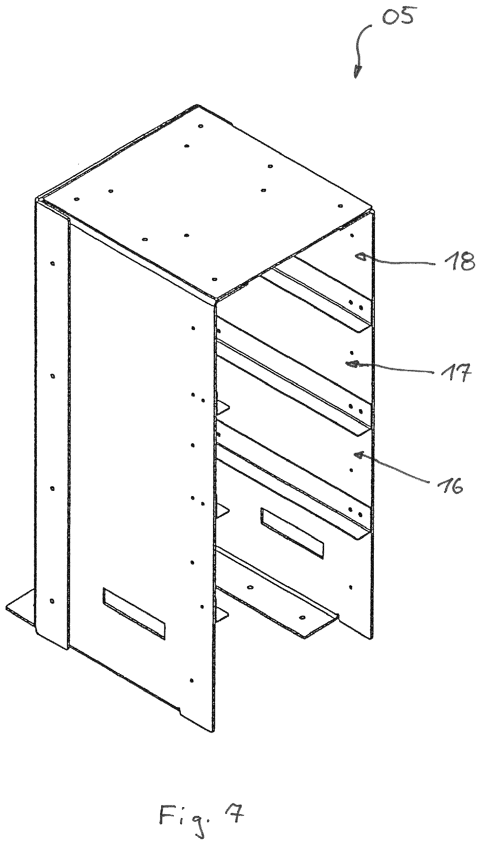

**Fig. 7** zeigt das Grillgutgehäuse 05 in perspektivischer seitlicher Ansicht. In drei übereinander angeordneten Abteilungen 16, 17 und 18 kann jeweils eine Grillgutkassette 06 mit dem zugehörigen Antrieb 13 aufgenommen werden.

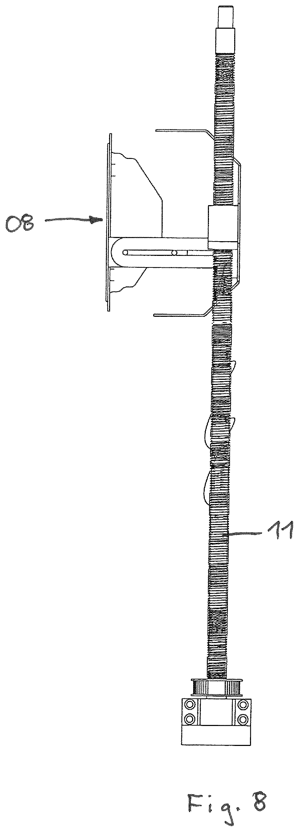

**Fig. 8** zeigt die Heizvorrichtung 08, die in der Art eines Infrarot-Heizstrahlers ausgebildet ist, in seitlicher Ansicht. Durch Antrieb der beiden Antriebsspindeln 11 kann die Heizvorrichtung 08 vertikal und damit parallel zu den Grillöffnungen 07 in den Grillgutkassetten 06 verfahren werden. Die Heizvorrichtung 08 ist dabei horizontal verstellbar an den Antriebsspindeln 11 gelagert, um den Abstand der Heizvorrichtung 08 zu den Grillöffnungen 07 variieren zu können.

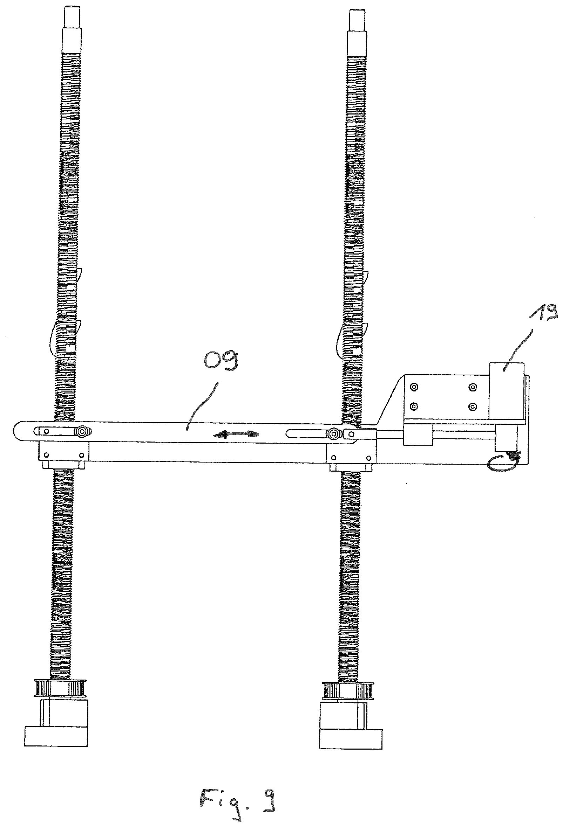

**Fig. 9** zeigt die Schneidvorrichtung 09 in Ansicht von vorne. Die Schneidvorrichtung 09 ist in der Art eines linear antreibbaren Schneidmessers ausgebildet, dessen Schneide mit einem Antriebsmotor 19 oszillierend angetrieben werden kann. Außerdem kann die Schneide 09 durch rotatorischen Antrieb der beiden Antriebsspindeln 12 vertikal verfahren werden, um das gegrillte Grillgut, das an den Grillöffnungen 07 übersteht, mit der oszillierenden Schneide abzuschneiden.

## Patentansprüche

1. Grillvorrichtung (01) zum Garen eines Grillgutes, umfassend zumindest eine Aufnahmevorrichtung zur Aufnahme eines Grillgutvorrats und umfassend zumindest eine Heizvorrichtung (08) zum Beheizen der Oberfläche des in der Aufnahmevorrichtung aufgenommenen Grillgutes,
**dadurch gekennzeichnet,**
**dass** die Aufnahmevorrichtung in der Art einer Grillgutkassette (06) ausgebildet ist, die den Grillgutvorrat umschließt, wobei die Grillgutkassette (06) eine der Heizvorrichtung (08) gegenüberliegend anordenbare Grillöffnung (07) aufweist, und wobei das Grillgut mittels einer Fördereinrichtung (13, 14) durch die Grillöffnung (07) aus der Grillgutkassette (06) in Richtung der Heizvorrichtung (08) ausgefördert werden kann.

2. Grillvorrichtung nach Anspruch 1,
**dadurch gekennzeichnet,**
**dass** die Fördereinrichtung ein Schubelement (14) umfasst, das an einer Seite des Grillgutvorrates zur Anlage kommen kann, wobei das Schubelement (14) mit einer Antriebseinrichtung (13) in Richtung der Grillöffnung verstellbar ist.

3. Grillvorrichtung nach Anspruch 2,
**dadurch gekennzeichnet,**
**dass** am Schubelement (14) zumindest ein Fixierelement (15), insbesondere zumindest ein Fixierspieß, vorgesehen ist, mit dem eine Seite des Grillgutvorrats am Schubelement (14) fixiert werden kann.

4. Grillvorrichtung nach einem der Ansprüche 1 bis 3,
**dadurch gekennzeichnet,**
**dass** die Grillvorrichtung (01) ein Grillgutgehäuse (05) umfasst, in dem mehrere, insbesondere drei, Grillgutkassetten (06) übereinander oder nebeneinander aufgenommen werden können.

5. Grillvorrichtung nach einem der Ansprüche 1 bis 4,
**dadurch gekennzeichnet,**
**dass** die Grillvorrichtung (01) eine verstellbar gelagerte und mit einer Antriebsvorrichtung antreibbare Schneidvorrichtung (09) umfasst, mit der das an der Grillöffnung (07) der Grillgutkassette (06) überstehende, gegarte Grillgut portionsweise abgeschnitten werden kann.

6. Grillvorrichtung nach einem der Ansprüche 1 bis 5,
**dadurch gekennzeichnet,**
**dass** die Schneidvorrichtung zumindest ein linear antreibbares Schneidmesser umfasst, dessen oszillierende Schneide durch Antrieb einer Antriebseinrichtung (19) schneidend am an der Grillöffnung (07) der Grillgutkassette (06) überstehenden, gegarten Grillgut zum Eingriff bringbar ist.

7. Grillvorrichtung nach einem der Ansprüche 1 bis 5,
**dadurch gekennzeichnet,**
**dass** die Schneidvorrichtung zumindest ein rotatorisch antreibbares Schneidmesser umfasst, dessen rotierende Schneide durch Antrieb einer Antriebseinrichtung schneidend am an der Grillöffnung (07) der Grillgutkassette (06) überstehenden, gegarten Grillgut zum Eingriff bringbar ist.

8. Grillvorrichtung nach einem der Ansprüche 1 bis 7,
**dadurch gekennzeichnet,**
**dass** in der Grillvorrichtung (01), insbesondere an der Schneidvorrichtung (09), ein Auffangelement vorgesehen ist, mit dem das abgeschnittene Grillgut aufgefangen werden kann.

9. Grillvorrichtung nach einem der Ansprüche 1 bis 8,
**dadurch gekennzeichnet,**
**dass** die Schneidvorrichtung (09) mit einem Zählwerk verbunden ist, mit dem die mit der Schneidvorrichtung (09) abgeschnittenen Grillgutportionen gezählt werden können.

10. Grillvorrichtung nach einem der Ansprüche 1 bis 9,
**dadurch gekennzeichnet,**
**dass** die Heizvorrichtung (08) verstellbar gelagert ist und mit einer Antriebsvorrichtung parallel zu der Grillöffnung (07) der Grillgutkassette (06) angetrieben werden kann.

11. Grillvorrichtung nach einem der Ansprüche 1 bis 10,
**dadurch gekennzeichnet,**
**dass** die Heizvorrichtung (08) einen Heizstrahler umfasst, mit dessen Heizstrahlung, insbesondere Infrarotstrahlung, das Grillgut an der von der Grillgutöffnung (07) der Grillgutkassette (06) gebildeten Fläche gegart werden kann.

12. Grillvorrichtung nach einem der Ansprüche 1 bis 11,
**dadurch gekennzeichnet,**
**dass** die Grillvorrichtung (01) in einem Gehäuse (02) angeordnet ist, das einen geschlossenen Garraum bildet.

13. Grillvorrichtung nach Anspruch 12,
**dadurch gekennzeichnet,**
**dass** im Gehäuse (02) der Grillvorrichtung (01) eine Kühlvorrichtung angeordnet ist, mit der die Grillgutkassette (06) mittelbar oder unmittelbar gekühlt werden kann.

14. Grillvorrichtung nach einem der Ansprüche 1 bis 13,
**dadurch gekennzeichnet,**
**dass** die Grillvorrichtung (01) eine Steuerung umfasst, die die Fördereinrichtung (13, 14) an der Grillgutkassette (06) und/oder den Antrieb der Schneidvorrichtung (09) und/oder den Antrieb der Heizvorrichtung (08) zur Herstellung einer Grillgutportion vollautomatisiert oder teilautomatisiert steuern kann.

15. Grillgutkassette (06) zur Aufnahme eines Grillgutvorrats, wobei die Grillgutkassette (06) eine Grillöffnung (07) aufweist, die einer Heizvorrichtung (08) gegenüberliegend anordenbar ist, und wobei die Grillgutkassette (06) eine Fördereinrichtung (13, 14) umfasst, mit der das Grillgut durch die Grillöffnung (07) aus der Grillgutkassette (06) ausgefördert werden kann.
